Europäisches Patentamt

(19) European Patent Office

Office européen des brevets

(11) Publication number: **0 077 631**
**A1**

## (12) EUROPEAN PATENT APPLICATION

(21) Application number: 82305415.0

(22) Date of filing: 12.10.82

(51) Int. Cl.³: **G 11 B 5/04**
**G 11 B 5/09**

(30) Priority: 16.10.81 US 312015

(43) Date of publication of application:
27.04.83 Bulletin 83/17

(84) Designated Contracting States:
DE FR GB IT

(71) Applicant: SPERRY CORPORATION
1290, Avenue of the Americas
New York, N.Y. 10019(US)

(72) Inventor: Schwartz, Allan Abraham
919 Cape George Place
San Jose CA 95133(US)

(74) Representative: Michaels, Peter Albert
Sperry Univac Patent & Licensing Services M.S. S2W1
Sperry Rand Ltd. Sperry Univac Centre Brentfields
London NW10 8LS(GB)

(54) Signal phase and amplitude equalising circuit.

(57) A signal phase and amplitude equalising circuit is described which is simple and allows for convenient and independent adjustment of phase and amplitude correction.

The signal from a magnetic read head (10) is twice delayed and amplified by delay lines (12, 15) and amplifiers (13, 16). The original signal and the twice-delayed signal are added by resistors (17, 18) at least one of which is adjustable, and a proportion of the sum selected by potentiometer (19) is subtracted from the once-delayed signal by a differential amplifier (14) to give an equalised signal of corrected phase and amplitude.

Preferred ranges for the first and second delays are respectively four-tenths to one and five-tenths and three-tenths to one four-tenths of the fifty-percent amplitude of the input pulse and the amplifiers (13 and 16) preferably have a gain of substantially unity.

FIG I

## Signal Phase and Amplitude Equalising Circuit

This invention relates to signal phase and amplitude equalising circuits, and has particular application to the equalisation of the read signal in magnetic data data recording systems. An object of the invention is to provide a simple circuit of this kind in which phase and amplitude correction can be readily and conveniently adjusted.

Phase and amplitude equalisation is used in magnetic digital data recording systems for processing the signal produced by a read head from a magnetic storage medium. The signal consists of pulses which are typically characterised by a rather large width at the baseline and asymmetry exemplified by the trailing portion of the pulse being elongated relative to the leading portion. These characteristics are particularly deleterious in cases of high density systems in which magnetic transitions representative of data recorded on the storage medium are closely spaced, as a result of which overlapping of individual read pulses occurs, causing pulse attenuation and so-called peak shift, which is likely to result in loss of data upon reading from the storage medium. Equalisation, that is, processing of the read signals in a manner which eliminates or significantly reduces the asymmetry, and slims the individual pulses, serves to preclude, or at least substantially reduce, overlap of adjacent pulses and the attendant pulse attenuation and peak shift.

Asymmetry of the pulses is caused by phase distortion resulting from differential phase shift of the constituent sinusoidal frequency components of each pulse, such phase shift being attributable generally to the frequency response of the magnetic head and characteristics of the head recording medium interface. The comparatively large baseline width of the pulses is attributable to the slight spacing existing between the head and recording medium whereby the head responds to each magnetic transition for a finite interval extending on both sides of the transition centerline. Phase equalisation serves to correct or compensate for the phase distortion existing in the signal and thus makes the pulses symmetrical. Amplitude equalisation serves to produce substantial slimming of the symmetrical pulses so the deleterious effects of pulse overlap are avoided.

The circuit of the present invention includes two delay lines for producing once- and twice-delayed versions of each input pulse. The delays are approximately equal and such that the peak of the input pulse occurs along the leading edge slope of the once delayed pulse while the peak of the twice delayed pulse occurs along the trailing edge slope of the once delayed pulse. A proportion of the input and twice delayed pulses is added to produce a phase and amplitude equalising signal, which is subtracted from the once-delayed pulse, so that the output of the differential combining means is a phase and amplitude equalised version of the once delayed pulse. Phase compensation is achieved by varying the amplitude of the input pulse relative to that of the twice delayed pulse and by varying the lengths of the two delays, so that upon differential combining with the once-delayed pulse, the trailing edge slope of the latter is made symmetrical about the peak with the leading edge slope thereof. The two delays can be made somewhat unequal, if desired, to enhance the compensation for phase distortion. Amplitude compensation is achieved by adjusting the amplitude of the phase and amplitude equaliser pulse signal (input pulse and twice-delayed version thereof) relative to the once-delayed pulse.

In our own U.S. patent number 4 266 204 issued 5 May 1981, there is described a signal amplitude equaliser circuit in which an input pulse is variously delayed and the delayed pulses are combined to give an equalised output pulse. The present invention provides a somewhat different circuit which permits the phase and amplitude corrections to be more conveniently adjusted.

An embodiment of the invention will now be described with

-3-

reference to the drawings, in which

Figure 1 is a circuit diagram of an equaliser circuit according to the invention, and

Figure 2 shows waveforms A to E at correspondingly lettered points in Figure 1 during operation.

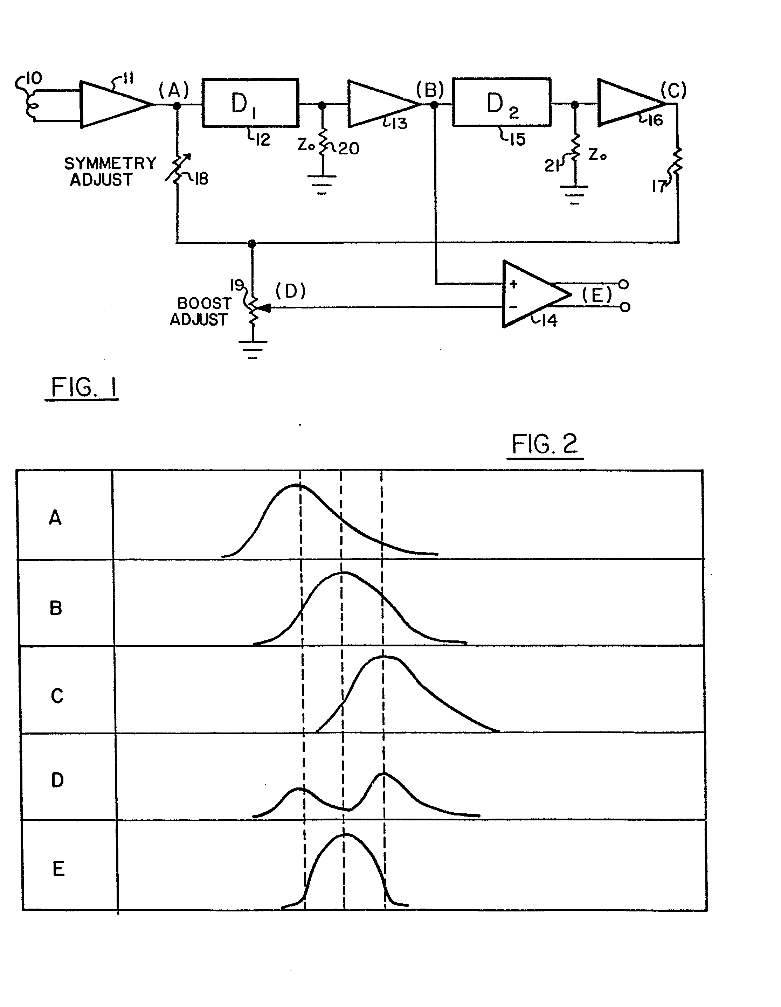

Referring to the figures, an input signal read by a magnetic read head 10 from a data track on a magnetic recording medium (not shown) comprises a series of alternately positive and negative pulses, which are applied to a preamplifier 11. A representative pulse at the preamplifier output (A) is illustrated by waveform A of Figure 2. It is rather wide at the base line, and asymmetrical about the peak, in that the trailing edge portion is elongated relative to the leading edge portion. As previously explained, such asymmetry is caused by phase distortion, that is, differential phase shift of the constituent sinusoidal waves comprising the pulse. Each such input pulse is applied to a delay line 12, which is coupled to a non-inverting amplifier 13 to produce at the amplifier output (B) a once-delayed and amplified version of the input pulse, illustrated by waveform B of Figure 2. The delay of delay line 12 is such that a point about midway between the base line and peak, but nominally somewhat closer to the baseline, on the leading edge slope of waveform B, is time-coincident with the peak of the input pulse. More specifically, to achieve optimum operation of the circuit, the delay line 12 should provide a delay in the range of four-tenths to one and five-tenths of the input pulse's fifty percent amplitude width, and the gain of amplifier 13 should be such as to make the peak amplitude of waveform B in the range of nine-tenths to one and one-tenth the peak amplitude of waveform A.

The output of amplifier 13 is coupled to one input of differential amplifier 14 and to delay line 15 which is connected to non-inverting amplifier 16 to produce at the amplifier output (C) a twice-delayed and further amplified version of the input pulse, illustrated by waveform C of

Figure 2. The delay of delay line 15 is such that the peak of waveform C is time-coincident with a point about midway between the peak and baseline, but nominally somewhat closer to the baseline, along the trailing edge slope of waveform B. In other words, waveform C is delayed relative to waveform B about the same amount, or slightly less, than waveform B is delayed relative to waveform A. More specifically, to achieve optimum operation of the circuit the delay line 15 should provide a delay in the range of three-tenths to one and four-tenths of the input pulse's fifty percent amplitude width, and the gain of amplifier 16 should be such as to make the peak amplitude of waveform C in the range of nine-tenths to one and one-tenth the peak amplitude of waveform A. It should be noted that both delay lines $D_1$ and $D_2$ are terminated in their characteristic impedance by resistors 20 and 21 to suppress reflections.

The input pulse waveform A and twice-delayed pulse waveform C are added by means of resistor 17 coupled to the output of amplifier 16, symmetry adjust (phase equaliser) variable resistor 18 coupled to the output of preamplifier 11, and boost adjust (amplitude equaliser) potentiometer 19 which is coupled to the other ends of resistor 17 and 18. The wiper arm (D) of potentiometer 19 is coupled to the other input of differential amplifier 14. The wiper arm signal is a phase and amplitude equalising signal illustrated by waveform D of Figure 2 and is the sum of attentuated versions of waveforms A and C. Application of waveform D to differential amplifier 14 along with waveform B serves to produce a pulse at the differential amplifier output E which is a symmetrical and slimmed version of the input pulse. Such symmetry and slimming is achieved by virtue of waveform D subtractively combining with waveform B. Phase equalisation, that is, symmetry of the output pulse, is achieved by varying resistor 18 for appropriately adjusting the relative magnitude of the two pulses of the phase and amplitude equalising signal (waveform D). Amplitude equalisation, that is slimming of the output pulse, is achieved by adjusting the amplitude of the phase and amplitude equalising signal pulses concurrently relative to the amplitude of the waveform B pulse by adjusting the wiper arm of potentiometer 19.

## Claims

1.    A signal phase and amplitude equalising circuit including delay means and amplifiers for twice delaying and amplifying an input signal pulse, characterised in that a combining circuit (14, 17, 18, 19) is arranged to subtract from the once-delayed signal (B) adjustable proportions of the undelayed input signal (A) and the twice-delayed signal (C) to produce a once-delayed equalised signal (E) of corrected phase and amplitude.

2.    A signal phase and amplitude equalising circuit according to claim 1 in which the combining circuit includes a pair of resistors (17, 18), at least one of which (18) is adjustable, for adding adjustable proportions of the undelayed input signal (A) and the twice-delayed signal, (C) boost adjustments means (19) for selecting a proportional part of this sum (D), and subtracting means (14) for subtracting the selected proportional part from the once-delayed signal (B) to obtain the equalised output signal (E).

3.    A signal phase and amplitude equalising circuit according to claim 1 or claim 2 in which the input signal pulse is delayed by between four-tenths and one and five-tenths of the fifty-percent amplitude width of the input signal pulse to provide the once-delayed pulse.

4.    A signal phase and amplitude equalising circuit according to any preceding claim in which the once-delayed signal pulse is further delayed by between three-tenths and one and four-tenths of the fifty-percent amplitude of the signal input pulse to provide the twice-delayed pulse.

5.    A signal phase and amplitude equalising circuit according to any preceding claim in which the gains of the amplifiers are such that the amplitude of the once-delayed signal pulse and of the twice-delayed signal pulse each lie in the range nine-tenths to one and one-tenth of the peak amplitude of the signal input pulse.

0077631

1/1

FIG. 1

FIG. 2

## DOCUMENTS CONSIDERED TO BE RELEVANT

| ategory | Citation of document with indication, where appropriate, of relevant passages | Relevant to claim | CLASSIFICATION OF THE APPLICATION (Int. Cl. ³) |
|---|---|---|---|
| | --- | | G 11 B 5/045 |
| X | US-A-3 737 808 (SRIVASTAVA) *Column 2, line 59 - column 3, line 27; column 5, line 21 - column 7, line 2; column 8, lines 18-32; figure 2* | 1,3,4 | G 11 B 5/09 |
| | --- | | |
| Y | | 2 | |
| | --- | | |
| X | IBM TECHNICAL DISCLOSURE BULLETIN, vol. 9, no. 10, March 1967, pages 1272-1273, New York (USA); J.C.VERMEULEN: "Read pulse compression by linear filtering". *Complete article* | 1 | |
| | --- | | |
| Y | IBM TECHNICAL DISCLOSURE BULLETIN. | 2 | **TECHNICAL FIELDS SEARCHED (Int. Cl. ³)** |
| | --- | | |
| Y | US-A-3 828 362 (AK) *Column 2, lines 39-51; figure 3* | 2 | G 11 B H 04 B H 04 L H 03 K |
| | --- | | |
| D,A | US-A-4 266 204 (JACOBY) | 1 | |
| | ------ | | |

The present search report has been drawn up for all claims

| Place of search THE HAGUE | Date of completion of the search 25-01-1983 | Examiner DAALMANS F.J. |
|---|---|---|

EPO Form 1503. 03.82